# EUROPÄISCHE PATENTSCHRIFT

(11) **EP 1 135 549 B1**
(45) Veröffentlichungstag und Bekanntmachung des Hinweises auf die Patenterteilung: **21.07.2004**
(21) Anmeldenummer: 99962116.2
(22) Anmeldetag: 01.12.1999
(51) Int. Cl.: D04B 1/00

(54) **ZUSATZFUNKTIONSELEMENTE**
SUPPLEMENTAL FUNCTION ELEMENTS
ELEMENTS A FONCTION AUXILIAIRE

(30) Priorität: 01.12.1998 DE 19855540
(43) Veröffentlichungstag der Anmeldung: 26.09.2001
(73) Patentinhaber: Gebrüder Achter GmbH & Co. KG, 41063 Mönchengladbach (DE)
(72) Erfinder: ROELL, Friedrich, D-88400 Biberach (DE)
(74) Vertreter: Zipse + Habersack
(86) Internationale Anmeldenummer: PCT/DE1999/003853
(87) Internationale Veröffentlichungsnummer: WO 2000/032860

(56) Entgegenhaltungen:
- EP-A- 0 361 855
- EP-A- 0 791 672
- WO-A-97/39172
- FR-A- 1 113 582
- US-A- 2 201 980

## Beschreibung

Die vorliegende Erfindung betrifft ein Gestrick für einen Sitzbezug bzw. ein Verfahren zur Herstellung eines Gestricks für einen Sitzbezug und eines Sitzbezuges selbst.

Es ist heutzutage hinlänglich bekannt, Sitzbezüge als dreidimensionales, konturiertes Teil fertig zu stricken, ohne daß weitere Konfektionierungsarbeiten vonnöten wären. Einen derartigen Sitzbezug beschreibt beispielsweise das europäische Patent 0 361 855. Mit dem dort gezeigten Verfahren lassen sich herkömmliche Sitzbezüge stricken. Nun besteht insbesondere im Bereich der individuellen Sitzherstellung, insbesondere bei Nachrüstsätzen ein Bedarf, individuelle Funktionselemente in den Sitzbezug einzubringen. Dies ist mit den bestehenden Technologien noch nicht möglich.

Es ist daher Aufgabe der Erfindung, ein Gestrick zu schaffen, das individuellen Anforderungen an die Musterung, Gestaltung oder Funktionselementen gerecht wird. Lösungen dieser Aufgabe sind Gegenstand der Ansprüche 1 und 3. Vorteilhafte Weiterbildungen der Erfindung sind Gegenstand der zugehörigen Unteransprüche.

Sitze, vor allem im mobilen Bereich, d.h. in Flugzeugen, Kraftfahrzeugen, Schnellbooten oder Zügen bieten heutzutage oft im Rahmen eines größeren Sitzkomforts die Möglichkeit, die Sitzfläche nach vorne zu verlängern. Deswegen ist an dem mobilen Sitz ein vorderer Bereich des Sitzes nach vorne hin verstellbar, um die Länge des Sitzbereichs verstellen zu können. Sitzbezugtechnisch wurde dieses Problem bislang dahingehend gelöst, daß das verstellbare Teil mit einem separaten Bezug versehen wurde. Dies führt jedoch dazu, daß in die Zwischenräume zwischen dem verstellbaren Teil und dem sonstigen Sitz Schmutz eindringt, der das optische Erscheinungsbild und gegebenenfalls sogar die Verstellfunktion beeinträchtigt. Gemäß der vorliegenden Erfindung wird dieser verstellbare Teil durch den Sitzbezug mit überdeckt, wobei der Sitzbezug im Bereich der Anordnung des verstellbaren Teils, d.h. in der Regel parallel zu einer Außenkante des Sitzbezuges mit einer Faltenstruktur in Art einer Ziehharmonika oder eines Blasebalgs versehen wird, die selbsttätig in eine zusammengezogene Stellung vorgespannt ist, und daher die Möglichkeit bietet, eine größere Sitzlänge beim Ausfahren des verstellbaren Teils durch ziehharmonikaartiges Auseinanderfahren mit umfassen zu können. Hierfür wird, je nach Herstellungsrichtung des Sitzbezuges, entweder alternierend auf dem vorderen und hinteren Nadelbett nicht gestrickt, wobei zwischen diesen linearen Bereichen über mehrere, d.h. beispielsweise fünf bis hundert Maschenreihen mit beiden Nadelbetten gestrickt wird. Durch diese Technik erreicht man parallel zu den Maschenreihen eine Ziehharmonikastruktur, die daraus resultiert, daß in den nicht gestrickten Bereichen der vorderen/hinteren Lage mehr Maschenreihen vorhanden sind als in der hinteren/vorderen Lage was zu gegensätzlich gekrümmten Bereichen führt. Eine derartige Gestrickstrucktur wird in der WO-A-9 739 172 zur Anwendung im Bengebereich von Gelenkbandagen beschrieben. Falls die ziehharmonikaartige Ausbildung parallel zu den Maschenstäbchen verlaufen soll, wird erfindungsgemäß derart gestrickt, daß an den betreffenden Maschenstäbchen alternierend auf dem vorderen oder hinteren Nadelbett locker bzw. fest gestrickt wird und vice versa. Dies läßt sich dadurch realisieren, daß die Nadeln der Flachstrickmaschine unterschiedlich tief kuliert werden. Auch hier wird zwischen den gekrümmten Bereichen ein Bereich über mehrere, z.B. fünf bis hundert Maschenstäbchen vorgesehen, in denen gleichmäßig mit beiden Nadelbetten gestrickt wird. Auf diese Weise wird eine ziehharmonikaartige Struktur parallel zu den Maschenstäbchen erzeugt. Die Struktur kann daher im Bereich vor allen beliebigen Außenkanten eines Sitzes integriert eingestrickt werden, wodurch sich die Herstellung separater Bezüge für bewegliche Teile des Sitzes erübrigt.

Bei der Herstellung der Ziehharmonikastruktur parallel zu den Maschenstäbchen ist es auch möglich, neben dem alternierenden Fest/Locker-Stricken in die aufgeblähte (locker gestrickte) Lage zusätzlich Maschen vom rückwärtigen Nadelbett zu transferieren oder Maschen zu teilen oder gegebenenfalls einen Kettfaden, Schußfaden oder Polfaden einzulegen, der mehr Volumen bringt.

Ein weiteres Problem bei der Herstellung von Sitzen, insbesondere mobilen Sitzen, sind die Klimaeigenschaften. So muß durch den Sitzbezug hindurch eine gewisse Belüftung und Feuchtigkeits- und Wärmeabfuhr sichergestellt werden. Hierfür ist ein Sitzbezug vorgesehen, der aus einem Doppeloder Mehrlagengestrick besteht, dessen Lagen über wenigstens einen Polfaden miteinander verbunden sind. Der Faden auf der Sichtseite des Gestricks hat kein Wasseraufnahmevermögen, wodurch sichergestellt wird, daß die Sichtseite des Bezugst trokken bleibt. Der Polfaden und/oder die rückwärtige Gestricklage enthalten jedoch Mikrofasern, die aufgrund ihrer Kapillarwirkung ein hohes Feuchtigkeitsaufnahmevermögen haben. Auf diese Weise wird die Feuchtigkeit von der Sichtseite des Bezuges sehr wirkungsvoll auf die Rückseite des Bezuges geleitet, von wo sie beispielsweise durch Vorsehen einer geeigneten Belüftung abgeführt werden kann. Dies führt dazu, daß selbst bei einem langen Sitzen unter klimatisch ungünstigen Bedingungen, z.B. im Sommer, die Oberseite des Gestrickes nie naß wird.

Ebenfalls im Zuge des Komforts innerhalb des Bereichs des mobilen Sitzens ist es heutzutage üblich, in Fahrzeugen, Flugzeugen oder Zügen Ablagen und Halterungen vorzusehen, um unterschiedliche Gegenstände, wie z.B. Becher oder Stifte sicher, d.h. gegen Umfallen gesichert, unterzubringen. Im Rahmen der individuellen Anpassung von Sitzen an unterschiedliche Physiognomien kann es auch wünschenswert sein, den Bezug an definierten Stellen, z.B. im Lordosenbereich aufzupolstern. Es läßt sich daher eine zylindrische schlaufen- oder taschenförmige Haltestruktur z.B. für einen Becherhalter oder eine Polstertasche an einem Strickbezug auf einer Flachstrickmaschine dadurch herstellen, daß die Haltestruktur, z.B. die Tasche oder ein Zylinder, als vorgefertigtes Teil, z.B. durch einen Kamm, in den Strickbereich transferiert oder in einem separaten Bereich, z.B. auf einem separaten Nadelbett der Flachstrickmaschine während des Strickens des Sitzbezuges gestrickt und anschließend an der gewünschten Stelle auf die Nadeln des Strickbereichs des Sitzbezuges transferiert und in den Bezug mit eingestrickt wird. Die Haltestruktur läßt sich auch direkt zusammen mit dem Sitzbezug herstellen. Währenddessen wird dann die Tätigkeit der anderen, den Bezug strickenden Nadeln unterbrochen. Auf diese Weise wird durch die Vorfabrikation oder das gleichzeitige Stricken der Haltestruktur die Maschinenlaufzeit nicht wesentlich verlängert und trotzdem ist es möglich, komplexe Haltestrukturen wie Taschen, Zylinder oder Schlaufen integriert an den Bezug anzustricken, ohne daß eine nachfolgende textile Bearbeitung (z.B. Annähen) oder Konfektionierung hierfür erforderlich ist. Das beanspruchte Herstellungsverfahren ist daher äußerst preisgünstig und automatisierbar.

Wenn die Haltestruktur eine gewisse Stabilität haben soll, läßt sich die gesamte Haltestruktur beispielsweise aus einem thermisch härtbaren Faden stricken, der nach Herstellung des Bezugs thermisch behandelt wird und dadurch aushärtet.

Durch das o.g. Verfahren lassen sich auch Taschen für die wahlweise Einbringung von Stützpolstern z.B. im Lordosenbereich der Rückenlehne herstellen. In diese kann wahlweise ein Schaumgummipolster oder dergleichen eingeschoben werden. Der Sitz kann somit in seiner Geometrie individuellen Bedürfnissen angepaßt werden.

Ein Trend in der Automobilherstellung geht heute dahin, dem Sitz immer mehr Funktionen zuzuordnen. Dies fing damit an, daß die Gurtschlösser an den Sitzen befestigt wurden. Heute müssen Sitze auch in der Lage sein, weitere Sicherheitseinrichtungen wie z.B. das gesamte Gurtsystem aufzunehmen. Auch Seitenairbags werden bereits in dem Sitz integriert. Ein gestrickter Sitzbezug kann einen Abdeckbereich für einen im Sitz integrierten Airbag aufweisen. Im Abdeckbereich des Airbags, möglichst an zentraler Stelle, wird demzufolge wenigstens eine Maschenreihe und/oder ein Maschenstäbchen mit einem Faden definierter Reißfestigkeit gestrickt, wobei die Reißfestigkeit dieses Fadens geringer als die des im übrigen Bereich des Sitzbezuges verwendeten Fadens ist. Hierdurch wird zum einen bewirkt, daß der Sitzbezug beim Austritt des Airbags genau an der vorgewählten Maschenreihe bzw. Maschenstäbchen aufreißt, da in diesem Bereich die Reißfestigkeit des Strickbezuges im Vergleich zum sonstigen Bezugbereich deutlich herabgesetzt ist. Zudem kann durch die genaue Definition der Reißfestigkeit des Fadens sichergestellt werden, daß der Strickbezug beim Austreten des Airbags auf jeden Fall aufreißt. Der Effekt kann abermals verstärkt werden, wenn Bereiche des Gestricks, welche die definiert reißende Maschenreihe oder das entsprechende Maschenstäbchen umgeben, mit einem Faden höherer Reißfestigkeit und/oder geringerer Elastizität gestrickt sind. Vorzugsweise ist das Gestrick im Abdeckbereich des Airbags auch mit einer geringeren absoluten Elastizität, z.B. kleiner als 15%, gestrickt. Auf diese Weise wird verhindert, daß sich der Strickbezug im Abdeckbereich zu stark deformiert, bevor der Airbag austritt, was eventuell die Funktion des Airbags beeinträchtigen könnte. Vorzugsweise ist die Reißfestigkeit des Fadens an der gewählten Maschenreihe bzw. dem gewählten Maschenstäbchen lediglich 1/20 bis ¼ so groß wie die Reißfestigkeit des Fadens im übrigen Abdeckbereich.

Wenn die Sollbruchstelle für den Austritt des Airbags im Bereich eines Maschenstäbchens verlaufen soll, wird vorzugsweise die Intarsiatechnik angewandt, wobei in den Bereichen beidseitig des Maschenstäbchens mit zwei ersten Fadenführern gestrickt wird, die ein Garn höherer Reißfestigkeit zuführen und im Bereich des Maschenstäbchens mit einem zweiten Fadenführer gestrickt wird, der den Faden geringerer definierter Reißfestigkeit zuführt.

Als Fäden definierter geringer Reißfestigkeit eigenen sich, Polyvinylchlorid-Spinnfasern (Thermovyl), Fluoro-Filamentgarne, Phenyl-Formaldehyd-Spinnfasern, Viskosefilamentgarn normal, Cuprospinnfasern, Caseinfasern als auch Ca-Alginatfilamentgarn. Die Gesamtdicke des Mono- oder Multifilamentfadens sollte unter 300 dtex, besser noch unter 150 dtex liegen, während die Fadenstärke im umgebenden Gestrick vorzugsweise über 500 dtex liegen sollte.

Besonders bei hochwertigen und luxuriösen Kraftfahrzeugen geht heute der Trend dahin, daß man technische Elemente, die per se keinen höheren ästhetischen Ansprüchen genügen, möglichst kaschiert. Es wird die Möglichkeit geschaffen, eine Innenraumbeleuchtung integriert in ein Gestrick, z.B. am Sitz oder an einer Seitenverkleidung oder dem Dachhimmel integriert, vorzusehen. Hierfür wird in das Gestrick wenigstens eine Lichtleitfaser eingebracht. Diese kann entweder als herkömmlicher Vermaschungsfaden oder als zusätzlich eingebrachter Faden vermascht und/oder als Schuß- und/oder als Kettfaden eingelegt werden. Wenigstens ein Ende der Lichtleitfaser wird dann mit einer Strahlungsquelle verbunden. Auf diese Weise wird der Beleuchtungskörper in die Verkleidungstextilie bzw. Bezugstextilie integriert eingebracht, ohne daß das Beleuchtungselement als solches nach außen hin in Erscheinung tritt. Vorzugsweise werden mehrere Lichtleitfasern in Form eines Schusses oder einer Kette eingetragen, z.B. durch Umhängen von Maschen oder durch Auf-Fang-Legen. Die Enden der Lichtleitfasern werden gebündelt und als Bündel an die Strahlungsquelle angeschlossen. Dies hat den Vorteil, daß selbst beim Bruch einer Lichtleitfaser die Funktion der gesamten integrierten Leuchte nicht gestört wird. Soll die Lichtleitfaser in dem Gestrick mit vermascht werden, so wird sie vorzugsweise mit einem möglichst silikonhaltigen Gleitmittel beschichtet, um auf diese Weise besser durch eine Flachstrickmaschine eingestrickt werden zu können. Als Lichtleitfaser werden vorzugsweise dünne flexible Glasfasern oder Epoxidharzfasern verwendet. Diese Technik bietet zudem den Vorteil, daß das Gestrick ansonsten aus einem Faden besteht, dessen Farbe der gewünschten Innenraumfarbe entspricht. Tagsüber tritt somit das gesamte Beleuchtungsobjekt nicht in Erscheinung, sondern erst nachts.

In der Regel wird ein Sitzbezug zweilagig hergestellt, was zum einen die Unterteilung von technischen Funktionen und ästhetischen Funktionen auf die hintere und vordere Lage ermöglicht und zum anderen die Stabilität des Gestricks insgesamt erhöht. Die beiden Lagen des Gestricks werden auf unterschiedliche Weise miteinander verbunden, z.B. durch Umhängen von Maschen von einem Nadelbett auf das andere oder durch eine Polfadenstruktur oder durch gegenseitiges Vermaschen oder Auf-Fang-Legen. Es kann nun auf sehr einfache und kostengünstige Weise eine Tasche z.B. zum Einschieben einer Polsterstütze bereitgestellt werden, in dem die Verbindung der beiden Lagen in dem Taschenbereich unterbrochen wird. Hierdurch wird zwischen den beiden Lagen eine Tasche gebildet, die unterschiedliche Funktionen haben kann, z.B. zur Aufnahme eines Polsterschaumteils dienen kann. Vorzugsweise sind die Maschen auf dem vorderen Nadelbett an einem zur Gestrickoberseite, -unterseite oder zu den Seiten hin offenen Rand der Unterbrechung abgekettelt. Auf diese Weise entsteht ein Schlitz in dem Gestrick, über den man Zugang zum Innenraum der Tasche hat. Die Maschen an dem Rand der Unterbrechung können alternativ oder zusätzlich auch mit einem Thermofaden verstrickt und anschließend thermisch behandelt werden, so daß ein Auftrennen der Maschen im Randbereich des Schlitzes vermieden wird. Der Schlitz kann durch eine integriert eingestrickte Lasche abgedeckt oder kaschiert sein, die einfach auf einem Nadelbett einlagig weiter gestrickt wird.

Es ist selbstverständlich nicht notwendig, daß der gesamte Sitzbezug mehrlagig gestrickt ist. Es ist im Grunde genommen ausreichend, daß der Sitzbezug im Bereich der Tasche und im direkt angrenzenden Bereich doppellagig gestrickt ist. Eine derartige Tasche kann somit auch in einem ansonsten einlagigen Strickbezug vorgesehen werden.

Um das Entstehen statischer elektrischer Ladung bei synthetischen textilen Sitzbezügen zu verhindern, weist der Sitzbezug vorzugsweise auf einer dem Sitzbezugträger zugewandten Seite ein elektrisch leitfähiges oder widerstandsleitfähiges Material auf. Eventuell durch Reibung von Kleidung an dem Sitzbezug entstehende statische Elektrizität wird über diese leitfähigen Bereiche über den Sitzbezugträger in die Fahrzeugerde bzw. Flugzeugerde abgeleitet. Das Entstehen statischer Elektrizität mit den bekannten unerwünschten Begleiteffekten wird dadurch vermieden. Vorzugsweise steht das leitfähige oder widerstandsleitfähige Material auf der Rückseite des Sitzbezuges mit einem Metallteil des Sitzbezugträgers in Kontakt, um die elektrische Erdung zu bewirken. Die leitfähigen Bereiche könnten jedoch auch direkt mit einem Metallteil des Fahrzeugs oder Flugzeugs verbunden sein.

Vorzugsweise wird das leitfähige oder widerstandsleitfähige Material als Faden in den Strickbezug integriert mit eingestrickt. Das Material kann somit entweder vermascht, aufplattiert oder als Schuß- oder Kettfaden eingebracht werden. Diese Technik hat den Vorteil, daß die leitfähigen Stellen genau definiert werden können und kein nachfolgender Beschichtungsvorgang notwendig ist, der gegebenenfalls sogar die klimatischen Eigenschaften des Sitzbezuges nachteilig verändert.

In einer alternativen Ausführungsform ist es jedoch auch möglich, die Rückseite des Materials mit einer leitfähigen oder widerstandsleitfähigen Schicht entweder durch Druck-, Tauch-, Dampfverfahren oder dergleichen zu beschichten. Eine weitere Möglichkeit wäre die Plasmabehandlung des gesamten Gewebes oder des zu verstrickenden Fadens, wodurch sehr dünne elektrisch leitfähige Schichten aufgebracht werden können, die die klimatischen Eigenschaften des Sitzbezuges nicht negativ verändern. In diesem Fall könnte die leitfähige Schicht auch auf die Sichtseite des Gestricks aufgebracht werden.

Die Erfindung wird nachfolgend beispielsweise anhand der Zeichnung beschrieben. In dieser zeigen:
Fig. 1 eine Vorderansicht einer Rückenlehne eines mobilen Sitzbezuges,
Fig. 2 eine Seitenansicht II aus Fig. 1,
Fig. 3 eine Aufsicht auf die Sitzfläche eines mobilen Sitzbezuges, und
Fig. 4 einen Schnitt IV-IV aus Fig. 3.

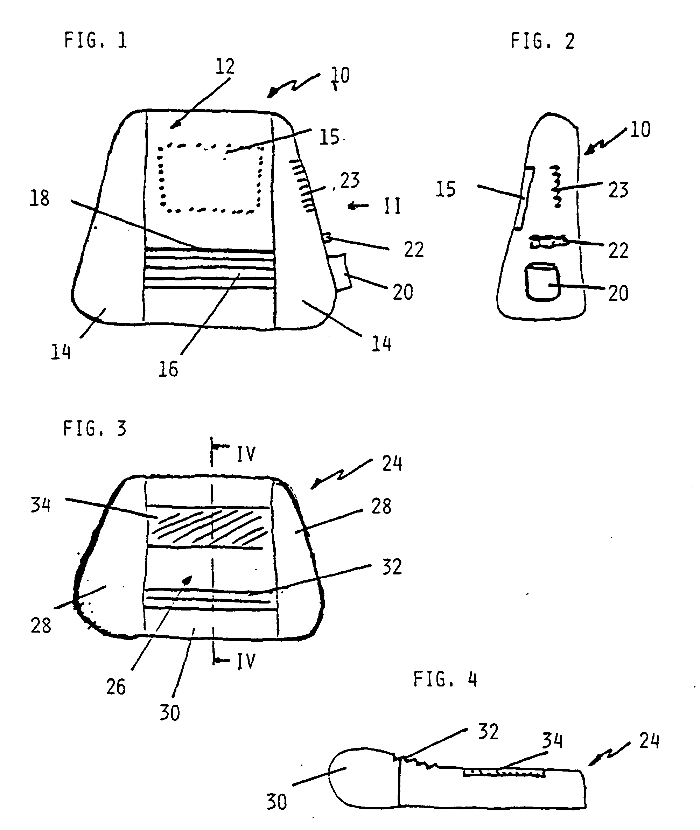

Fig. 1 zeigt die Rückenlehne 10 eines mobilen Sitzes. Die Rükkenlehne 10 enthält einen im wesentlichen vertikalen Lehnenbereich 12 und beidseitig des Lehnenbereichs Führungsbereiche 14, durch welche eine auf dem Sitz sitzende und im Lehnenbereich 12 anlehnende Person seitlich geführt wird. Der Lehnenbereich 12 umfaßt einen Rückenbereich 15, der optisch wahlweise zurückhaltend oder akzentuiert gestaltet werden kann, in welchem die rückwärtige Lage des gestrickten Sitzbezuges des Sitzes 10 aus einem Mikrofasern enthaltenden Faden besteht, während gleichzeitig an der Sichtseite des Sitzbezuges der Faden eine Stärke von über 300 dtex aufweist oder die Filamente des Fadens eine Stärke > 30 dtex aufweisen, so daß er keine feuchtigkeitsspeichernden Eigenschaften besitzt, während Feuchtigkeit über die Mikrofasern an die Rückseite des Bezugs geleitet wird, wo sie durch Ventilation abgeführt werden kann. Etwas weiter unten an dem Lehnenbereich 12 im Bereich der Lordose ist eine Einschubtasche 16 vorgesehen, die integriert in dem Lehnenbereich dadurch vorgesehen ist, daß dieser Bereich durch ein vorzugsweise vierlagiges Gestrick gestrickt ist, bei welchem die hinteren beiden Lagen mit den vorderen beiden Lagen nicht verbunden sind. Die vorderen beiden Lagen bilden die Vorderwand der Tasche, die eine Ziehharmonikastruktur aufweist. Sie hat daher beim Einschieben eines Lordosenpolsters in die Tasche die notwendige Elastizität um das Polster aufzunehmen. Die Ziehharmonikastruktur der Tasche ist durch wechselseitiges Aktivieren und Nichtaktivieren der Nadeln der beiden Nadelbetten hergestellt, in welchen dieser Bereich gestrickt wird. Wird der Bezug von einer Seite aus gestrickt, so verläuft der Ziehharmonikabereich der Tasche 16 in Stäbchenrichtung. Der Ziehharmonikaeffekt wird dann derart hergestellt, daß alternierend auf vorderen oder hinteren Nadeln enger bzw. lockerer gestrickt wird. Zwischen diesem linearen inhomogenen Bereich wird auf beiden Nadelbetten gleichmäßig gestrickt. Am oberen Ende der Tasche 16 ist ein Schlitz 18 vorgesehen, der durch Abketteln der vorderen Lagen der Tasche 16 erzielt worden ist. Seitlich an der Rückenlehne ist ein Becherhalter 20 und drei Bleistifthalter 22 an den Sitzbezug integriert eingestrickt. Diese Teile lagen vorgestrickt fertig vor und wurden beim Stricken des Sitzbezuges in den Strickbereich des Bezuges transferiert und mit eingestrickt.

Seitlich an der Rückenlehne 10 ist eine Maschenreihe 23 mit einem Faden geringerer und definierter Reißfestigkeit als im übrigen Gestrick vorgesehen. Diese Maschenreihe ist zentral über einem Airbagbereich der Rückenlehne 10 angeordnet, so daß diese Maschenreihe beim Auslösen eines Airbags definiert aufreißt, wodurch wiederum der Airbag definiert und sicher austreten kann. Durch die Maschenreihe 23 wird somit eine definierte Sollbruchstelle im Sitzbezug für den Airbag geschaffen.

Fig. 3 und 4 zeigen den Sitzteil 24 eines mobilen Sitzes, umfassend einen Sitzbereich 26, der wiederum von zwei seitlichen Führungsbereichen 28 umgeben ist. Der vordere Bereich 30 des Sitzes 24 ist nach vorne, d.h. in der Zeichnung nach unten hin ausfahrbar, was dadurch möglich ist, daß hinter diesem ausfahrbaren Bereich 30 eine Ziehharmonikastruktur 32 ausgebildet ist, die in gleicher Weise hergestellt wird, wie die vordere Lage der Lordosentasche 16 aus Fig. 1. Im Rückenlehnenbereich ist ebenfalls eine Klimazone 34 vorgesehen, die in Aufbau und Funktion der Klimazone 15 in Fig. 1 entspricht.

## Patentansprüche

1. Verfahren zur Herstellung eines doppellagigen Gestricks mit einer Faltenstruktur für einen Sitzbezug auf einer Flachstrickmaschine mit wenigstens zwei Nadelbetten, **dadurch gekennzeichnet, daß** während der Herstellung des Gestricks in Bereichen definierter Maschenstäbchen alternierend mit den Nadeln des vorderen Nadelbetts engmaschig und mit den Nadeln des hinteren Nadelbetts locker gestrickt wird und vice versa.

2. Verfahren nach Anspruch 1,
**dadurch gekennzeichnet, daß** zwischen den Bereichen Abstände von fünf bis hundert Maschenstäbchen vorgesehen werden, in welchen mit beiden Nadelbetten gleichmäßig gestrickt wird.

3. Sitzbezug mit einem doppelagigen Gestrick, das einen geformten Bereich mit einer Faltenstruktur aufweist, bei dem in Bereichen definierter Maschenstäbchen die vordere Lage locker gestickt ist, während die hintere Lage engmaschig gestrickt ist oder vice versa, hergestellt nach Anspruch 1 oder 2.

## Claims

1. A method for producing a two-ply knit having a corrugated structure for a seat cover on a flat bed machine including at least two needle beds, comprising the step of: knitting alternatingly tightly and loosely with the needles of the front and rear needle bed respectively and vice-versa in portions of defined wales in producing said knit.

2. The method as set forth in claim 1, **characterized in that** spacings of five to a hundred wales are provided between the portions in which knitting is done uniformly with both needle beds.

3. A seat cover including a two-ply knit, comprising a formed portion having a corrugated structure wherein in defined wale portions the front ply is knitted loose whilst the rear ply is knitted tight, or vice versa, produced by a method as set forth in claim 1 or 2.

## Revendications

1. Procédé pour la fabrication d'un tricot à double couche à structure à plis destiné à une garniture de siège sur une tricoteuse rectiligne, avec au moins deux fontures, **caractérisé en ce que** pendant la fabrication du tricot, on tricote de façon alternée et à mailles serrées dans les zones de baguettes de mailles définies avec les aiguilles de la fonture avant et avec les aiguilles de la fonture arrière de façon souple et vice versa.

2. Procédé selon la revendication 1, **caractérisé en ce qu'**on a prévu entre les zones, des distances de cinq à cent mètres des baguettes de mailles dans lesquelles on tricote avec les deux fontures de façon régulière.

3. Garniture de siège avec un tricot à double couche qui présente une zone formée avec une structure en plis dans lequel tricot, on a tricoté la couche avant de façon souple dans des zones définies de baguettes de mailles alors que la couche arrière est tricotée de façon serrée ou vice versa, fabriqué selon la revendication 1 ou 2.
